# EUROPÄISCHE PATENTSCHRIFT

(11) **EP 3 615 353 B1**
(45) Veröffentlichungstag und Bekanntmachung des Hinweises auf die Patenterteilung: **10.11.2021**
(21) Anmeldenummer: 18720763.4
(22) Anmeldetag: 18.04.2018
(51) Int. Cl.: B60C 23/04

(54) **REIFENDRUCKÜBERWACHUNGSEINHEIT**
TYRE PRESSURE MONITORING UNIT
UNITÉ DE CONTRÔLE DE LA PRESSION DES PNEUMATIQUES

(30) Priorität: 28.04.2017 DE 102017109197; 16.05.2017 DE 102017110570
(43) Veröffentlichungstag der Anmeldung: 04.03.2020
(73) Patentinhaber: Huf Baolong Electronics Bretten GmbH, 75015 Bretten (DE)
(72) Erfinder: KESSLER, Ralf, 76327 Pfinztal (DE); SIMON, Jörg, 42489 Wülfrath (DE); BRÄUNING, Jens, 75056 Sulzfeld (DE)
(74) Vertreter: Twelmeier Mommer & Partner
(86) Internationale Anmeldenummer: PCT/EP2018/059859
(87) Internationale Veröffentlichungsnummer: WO 2018/197290

(56) Entgegenhaltungen:
- EP-A2- 1 605 528
- WO-A1-2017/002981
- US-A1- 2003 209 064
- US-A1- 2008 001 577

## Beschreibung

Die Erfindung geht von einer Reifendrucküberwachungseinheit mit den im Oberbegriff des Anspruchs 1 angegebenen Merkmalen aus, wie sie beispielsweise aus US 2003/209064 A1 bekannt ist. Ähnliche Reifendrucküberwachungseinheiten sind beispielsweise aus US 2008/001577 A1 und EP 1 605 528 A2 bekannt.

Zur Reifendrucküberwachung werden an den einzelnen Rädern eines Fahrzeugs jeweils Reifendrucküberwachungseinheiten montiert, die Druckdaten drahtlos an eine Zentraleinheit des Fahrzeugs senden. Der Energiebedarf einer solchen Reifendrucküberwachungseinheit wird bei gebräuchlichen Systemen in der Regel von einer Batterie gedeckt, die fest vergossen in die Reifendrucküberwachungseinheit eingebaut ist, so dass die Lebensdauer der Reifendrucküberwachungseinheit durch die Lebensdauer der Batterie begrenzt ist. Daneben sind auch Systeme bekannt, bei denen der Energiebedarf der Reifendrucküberwachungseinheit durch einen Generator gedeckt wird, der während der Fahrt des Fahrzeugs mechanische Energie in elektrische Energie umwandelt. Damit eine solche Reifendrucküberwachungseinheit stets funktionsbereit ist, muss die von dem Generator gelieferte Energie gespeichert werden, etwa in einem Kondensator oder einem Akkumulator.

Ein nicht-wässriger Elektrolytakkumulator mit einem mehrschichtigen kompakten Design ist aus WO 2017/002981 A1 bekannt.

Kondensatoren haben dabei den Nachteil einer vergleichsweise geringen Energiespeicherdichte und einer erheblichen Selbstentladung. Herkömmliche Akkumulatoren haben zwar eine gute Energiespeicherdichte, können den in einem Fahrzeugreifen auftretenden Kräften bei Beschleunigungen von bis zu 6000 g aber nicht ohne weiteres standhalten, was derzeit mechanisch aufwendige Konstruktionen erforderlich macht.

Aufgabe der vorliegenden Erfindung ist deshalb, einen Weg aufzuzeigen, wie von einem Generator gelieferte elektrische Energie in einer Reifendrucküberwachungseinheit auf kleinem Raum kostengünstig gespeichert werden kann.

Diese Aufgabe wird durch eine Reifendrucküberwachungseinheit mit den im Anspruch 1 angegebenen Merkmalen gelöst. Vorteilhafte Weiterbildungen der Erfindung sind Gegenstand von Unteransprüchen.

Eine erfindungsgemäße Reifendrucküberwachungseinheit enthält einen Festkörperakkumulator zur Speicherung der von ihrem Generator erzeugten Energie. Festkörperakkumulatoren können im Vergleich zu herkömmlichen Akkumulatoren, die flüssige Elektrolyten enthalten, wesentlich leichter großen Beschleunigungskräften Stand halten, da ein Festkörperelektrolyt im Gegensatz zu einer Flüssigkeit selbst bei extremen Kräften nicht aus dem Akkumulator austritt und deshalb auf aufwendige Maßnahmen zum Abdichten der Zelle bzw. der Zellen verzichtet werden kann.

Festkörperakkumulatoren enthalten als Elektrolyt einen Festkörper, der als lonenleiter einen elektrischen Strom zwischen den beiden Elektroden des Akkumulators ermöglicht. Als Festkörperelektrolyt eines Akkumulators kann beispielsweise Ag₄Rbl₅ für den Ladungstransport von Silberionen verwendet werden. Ein entsprechender Akkumulator wird dann als Silber-Festkörperakkumulator bezeichnet. Bevorzugt wird erfindungsgemäß ein Lithium-Festkörperakkumulator verwendet, also einen Akkumulator mit einem lonenleiter für Lithiumionen, beispielsweise LiI/Al₂O₃ als Festkörperelektrolyt.

Eine vorteilhafte Weiterbildung der Erfindung sieht vor, dass der Akkumulator ein Lithium-Cobaltdioxid-Festkörperakkumulator ist. Ein solcher Akkumulator hat eine Anode aus Lithium, Lithium-Phosphor-Oxinitrid oder einer anderen Keramik als Festkörperelektrolyten, und einer Kathode aus Lithium-Cobaltdioxid. Die Anode und Kathode können vom Elektrolyten durch Polymer-Keramik-Verbundstoffe getrennt werden, die den Ladungstransfer an der Anode verbessern und die Kathode elektrochemisch mit dem Elektrolyten verbinden. Die Polymer-Keramik-Verbundstoffe dienen dazu, den Widerstand zu verringern.

Eine weitere vorteilhafte Weiterbildung der Erfindung sieht vor, dass der Festkörperakkumulator mehrere Zellen enthält, beispielsweise als ein Stapel aus aufeinander geschichteten Zellen ausgebildet ist. Die einzelnen Zellen eines Festkörperakkumulators können in Dünnfilmtechnik, beispielsweise mit PVD-Beschichtungsverfahren, hergestellt werden, also beispielsweise eine Dicke von weniger als 50 µm haben, etwa 10 µm bis 40 µm. Die Zellen können dabei in praktisch beliebiger Form aus einem Halbzeug ausgeschnitten werden, so dass knapper Bauraum in der Reifendrucküberwachungseinheit durch einen entsprechend bemessenen Stapel aus Zellen optimal ausgenutzt werden kann.

Die einzelnen Zellen des Festkörperakkumulators können in Reihe oder parallel geschaltet sein. Bevorzugt sind die Zellen parallel geschaltet, da für den Betrieb einer Reifendrucküberwachungseinheit in der Regel keine höheren Spannungen erforderlich sind.

Erfindungsgemäß ist vorgesehen, dass die Reifendrucküberwachungseinheit zur Speicherung der von dem Generator erzeugten Energie zusätzlich zu dem Festkörperakkumulator ein Kondensator enthält. Bei Temperaturen unter dem Gefrierpunkt, insbesondere bei tiefen Temperaturen von -30°C bis -40°C, nimmt der Innenwiderstand eines Festkörperakkumulators stark zu, so dass es schwierig werden kann, alle Komponenten der Reifendrucküberwachungseinheit mit elektrischer Energie zu versorgen. Indem als zusätzlicher Energiespeicher ein Kondensator eingesetzt wird, lässt sich auch bei tiefen Temperaturen, wie sie im Winter auftreten können, eine zuverlässige Energieversorgung der Komponenten einer Reifendrucküberwachungseinheit realisieren.

Eine weitere vorteilhafte Weiterbildung der Erfindung sieht vor, dass von dem Generator erzeugte Energieüberschuss stets an den Festkörperakkumulator oder den Kondensator abgegeben wird. Ein Energieüberschuss liegt vor, wenn der Generator mehr Energie liefert als für den Betrieb der Reifendrucküberwachungseinheit momentan benötigt wird. Abhängig von der Effizienz des Generators und des Energiebedarfs der Reifendrucküberwachungseinheit sind dazu unterschiedliche Fahrzeuggeschwindigkeiten notwendig, um einen Energieüberschuss zu erzielen.

Die Kapazität des Festkörperakkumulators wird deshalb bevorzugt so dimensioniert, dass auch in Fahrszenarien mit geringen Fahrzeuggeschwindigkeiten, wie z.B. im Stadtverkehr und daraus resultierenden geringen Energieüberschüssen die Funktion des Reifendrucküberwachungssystem bei üblicher Weise auftretenden Stillstandzeiten des Fahrzeugs gewährleistest ist.

Auch bei Stillstand des Fahrzeugs können Funktionen des Reifendrucküberwachungssystems durchgeführt werden, indem die Reifendrucküberwachungseinheit über den Festkörperakkumulator mit Energie versorgt wird. Falls bei geringen Fahrzeuggeschwindigkeiten die momentane Generatorleistung für den Betrieb der Reifendrucküberwachungseinheit nicht ausreicht, unterstützt der Festkörperakkumulator.

Eine weitere vorteilhafte Weiterbildung der Erfindung sieht vor, dass der Festkörperakkumulator zusammen mit weiteren Komponenten der Reifendrucküberwachungseinheit, beispielsweise der Steuerungseinheit, auf einer Leiterplatte mittels SMD-Technik montiert ist. Bevorzugt wird dafür ein Weichlot verwendet, das einen Schmelzpunkt von 183°C oder weniger hat, insbesondere einen Schmelzpunkt von 170°C oder weniger. Vorteilhaft kann so die Temperaturbelastung des Festkörperakkumulators bei der Fertigung reduziert werden. Geeignet sind beispielsweise Zinnlote, etwa Sn42Bi58, Sn62Pb36Ag2, oder sonstige Lote mit ausreichend niedrigem Schmelzpunkt.

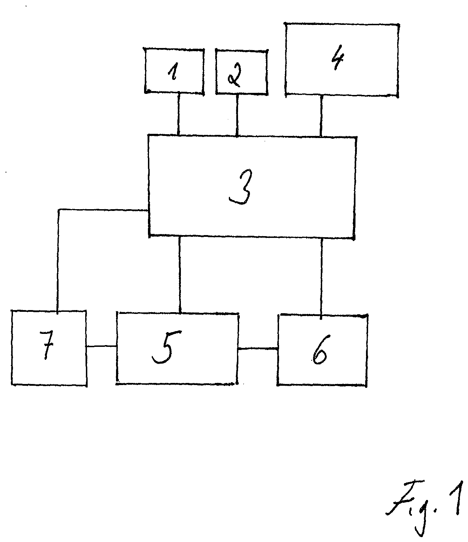

Weitere Einzelheiten und Vorteile der Erfindung werden an einem Ausführungsbeispiel unter Bezugnahme auf die beigefügte Zeichnung erläutert. Es zeigt:
- .Fig.1: eine schematische Skizze einer Reifendrucküberwachungseinheit.

Die in Fig. 1 schematisch dargestellte Reifendrucküberwachungseinheit enthält einen Drucksensor 1 und einen Temperatursensor 2, die jeweils an eine Steuereinheit 3, beispielsweise einen Mikrokontroller, angeschlossen sind. Die Steuereinheit 3 liefert zu sendende Druck- und Temperaturdaten des Reifens an eine Sendeeinheit 4, um diese Daten drahtlos an eine nicht dargestellte Zentraleinheit des Fahrzeugs zu senden.

Die elektrische Energie für die Steuereinheit 3, die Sendeeinheit 4 sowie den Drucksensor 1 und den Temperatursensor 2 wird von einem Generator 5 erzeugt, beispielsweise einem piezoelektrischen Generator. Der Generator 5 ist an einen Festkörperakkumulator 6 angeschlossen, in dem von dem Generator 5 erzeugte Energie gespeichert und nach Bedarf an die Steuereinheit 3, die Sendeeinheit 4, den Drucksensor 1 und den Temperatursensor 2 abgegeben wird. Der Festkörperakkumulator wird stets aufgeladen, wenn die momentane Generatorleitung höher ist als die momentan zum Betrieb der Reifendrucküberwachungseinheit erforderliche Leistung.

Der Festkörperakkumulator 6 kann beispielsweise ein Lithium-Cobaltdioxid-Festkörperakkumulator sein. Derartige Akkumulatoren können in Dünnschichttechnik ausgeführt sein, also aus einem Stapel von Zellen bestehen, die parallel geschaltet sein können. Die einzelnen Zellen haben bevorzugt eine Dicke von weniger als 50 µm, beispielsweise 10 µm bis 40 µm. Der Festkörperakkumulator 6 kann in SMD-Technik zusammen mit der Steuereinheit 3 auf einer Leiterplatte montiert sein.

Der Festkörperakkumulator 6 wird bevorzugt unabhängig von seinem Ladezustand aufgeladen. Sobald der Generator 5 einen Energieüberschuss produziert, wird dieser an den Festkörperakkumulator 6 oder einen anderen Energiespeicher abgegeben.

Zusätzlich zu dem Festkörperakkumulator 6 enthält die Reifendrucküberwachungseinheit als weiteren Energiespeicher einen Kondensator 7. Der Kondensator 7 kann die Energieversorgung insbesondere bei tiefen Temperaturen erleichtern, bei denen der Festkörperakkumulator wegen seines dann erhöhten Innenwiderstands unter Umständen nur bedingt einsatzfähig ist.

Die Steuereinheit 3 wählt erfindungsgemäß unter Verwendung von Messwerten des Temperatursensors 2 aus, welcher der beiden Energiespeicher, d.h. der Festkörperackumulator 6 oder der Kondensator 7, in welchem Maß genutzt werden soll. Bei tiefen Temperaturen kann der Steuereinheit 3 beispielsweise den Kondensator 7 verwenden, um die einzelnen Komponenten der Reifendrucküberwachungseinheit mit Energie zu versorgen und diesen bevorzugt aufladen, während bei höheren Temperaturen in erster Linie der Festkörperakkumulator 6 genutzt wird.

### Bezugszeichenliste

- 1: Drucksensor
- 2: Temperatursensor
- 3: Steuereinheit
- 4: Sendeeinheit
- 5: Generator
- 6: Festkörperakkumulator
- 7: Kondensator

## Patentansprüche

1. Reifendrucküberwachungseinheit zum Überwachen des Drucks in einem Fahrzeugreifen, mit
einem Drucksensor (1) zum Messen des Reifendrucks,
einer Sendeeinheit (4) zum drahtlosen Übertragen von Reifendruckdaten, einem Generator (5) zum Erzeugen elektrischer Energie für den Drucksensor (1) und die Sendeeinheit (4), und
einem Akkumulator zum Speichern der von dem Generator (5) erzeugten Energie,
wobei der Akkumulator ein Festkörperakkumulator (6) ist, und
wobei an den Generator (5) zusätzlich zu dem Festkörperakkumulator (6) ein Kondensator (7) zum Speichern der von dem Generator (5) erzeugten Energie angeschlossen ist,
**gekennzeichnet durch**
eine Steuereinheit (3), die Messsignale des Temperatursensors (2) auswertet und in Abhängigkeit von der gemessenen Temperatur entscheidet, ob die von dem Generator (5) erzeugte Energie zum Aufladen des Kondensators (7) oder des Festkörperakkumulators (6) genutzt wird.

2. Reifendrucküberwachungseinheit nach Anspruch 1, **dadurch gekennzeichnet, dass** der Festkörperakkumulator (6) ein Lithium-Festkörperakkumulator ist, vorzugsweise ein Lithium-Cobaltdioxid-Festkörperakkumulator.

3. Reifendrucküberwachungseinheit nach Anspruch 2, **dadurch gekennzeichnet, dass** der Festkörperakkumulator (6) ein Stapel aus aufeinander geschichteten Zellen ist.

4. Reifendrucküberwachungseinheit nach Anspruch 3, **dadurch gekennzeichnet, dass** die einzelnen Zellen parallel geschaltet sind.

5. Reifendrucküberwachungseinheit nach Anspruch 3 oder 4, **dadurch gekennzeichnet, dass** die einzelnen Zellen eine Dicke von weniger als 50 Mikrometern haben, vorzugsweise 10 bis 40 Mikrometer.

6. Reifendrucküberwachungseinheit nach einem der vorstehenden Ansprüche, **dadurch gekennzeichnet, dass** der Generator (5) ein piezoelektrischer Generator ist.

7. Reifendrucküberwachungseinheit nach einem der vorstehenden Ansprüche, **dadurch gekennzeichnet, dass** der Festkörperakkumulator (6) mittels SMD-Technik auf eine Schaltungsträgerplatte montiert ist.

8. Reifendrucküberwachungseinheit nach Anspruch 7, **dadurch gekennzeichnet, dass** der Festkörperakkumulator (6) mittels eines Weichlots verlötet ist, das eine Schmelztemperatur von 183°C oder weniger hat.

## Claims

1. Tyre pressure monitoring unit for monitoring pressure in a vehicle tyre, comprising
a pressure sensor (1) for measuring tyre pressure,
a transmitting unit (4) for wirelessly transmitting tyre pressure data,
a generator (5) for generating electrical energy for the pressure sensor (1) and the transmitting unit (4), and
an accumulator for storing the energy generated by the generator (5), wherein the accumulator is a solid-state accumulator (6), and
wherein a capacitor (7) for storing the energy generated by the generator (5) is connected to the generator (5) in addition to the solid-state accumulator (6),
**characterized by**
a control unit (3) which evaluates measuring signals from the temperature sensor (2) and decides whether the energy generated by the generator (5) will be used to charge the capacitor (7) or the solid state accumulator (6) depending on the measured temperature.

2. Tyre pressure monitoring unit according to Claim 1, **characterized in that** the solid-state accumulator (6) is a lithium solid-state accumulator, preferably a lithium-cobalt dioxide solid-state accumulator.

3. Tyre pressure monitoring unit according to Claim 2, **characterized in that** the solid state accumulator (6) is a stack of cells placed in layers one on top of the other.

4. Tyre pressure monitoring unit according to Claim 3, **characterized in that** the individual cells are connected in parallel.

5. Tyre pressure monitoring unit according to Claim 3 or 4, **characterized in that** the individual cells have a thickness of less than 50 micrometres, preferably 10 to 40 micrometres.

6. Tyre pressure monitoring unit according to any one of the preceding claims, **characterized in that** the generator (5) is a piezoelectric generator.

7. Tyre pressure monitoring unit according to any one of the preceding claims, **characterized in that** the solid-state accumulator (6) is mounted on a circuit carrier board by means of SMD technology.

8. Tyre pressure monitoring unit according to Claim 7, **characterized in that** the solid-state accumulator (6) is soldered by means of a soft solder which has a melting temperature of 183 °C or less.

## Revendications

1. Unité de contrôle de pression de pneumatique pour contrôler la pression dans un pneumatique de véhicule avec
un capteur de pression (1) pour mesurer la pression de pneumatique, une unité d'émission (4) pour la transmission sans fil des données de pression de pneumatique,
un générateur (5) pour produire de l'énergie électrique pour le capteur de pression (1) et l'unité d'émission (4), et
un accumulateur pour accumuler l'énergie produite par le générateur (5), sachant que l'accumulateur est un accumulateur solide (6), et
sachant qu'un condensateur (7) pour accumuler l'énergie produite par le générateur (5) est raccordé au générateur (5) en plus de l'accumulateur solide (6),
**caractérisée par**
une unité de commande (3), qui évalue les signaux de mesure du capteur de température (2) et décide en fonction de la température mesurée, si l'énergie produite par le générateur (5) est utilisée pour charger le condensateur (7) ou l'accumulateur solide (6).

2. Unité de contrôle de pression de pneumatique selon la revendication 1, **caractérisée en ce que** l'accumulateur solide (6) est un accumulateur solide au lithium, de préférence un accumulateur solide au lithium-dioxyde de cobalt.

3. Unité de contrôle de pression de pneumatique selon la revendication 2, **caractérisée en ce que** l'accumulateur solide (6) est un empilement de cellules superposées l'une sur l'autre.

4. Unité de contrôle de pression de pneumatique selon la revendication 3, **caractérisée en ce que** les cellules individuelles sont montées en parallèle.

5. Unité de contrôle de pression de pneumatique selon la revendication 3 ou 4, **caractérisée en ce que** les cellules individuelles ont une épaisseur de moins de 50 micromètres, de préférence de 10 à 40 micromètres.

6. Unité de contrôle de pression de pneumatique selon l'une quelconque des revendications précédentes, **caractérisée en ce que** le générateur (5) est un générateur piézoélectrique.

7. Unité de contrôle de pression de pneumatique selon l'une quelconque des revendications précédentes, **caractérisée en ce que** l'accumulateur solide (6) est monté au moyen de la technologie des composants montés en surface sur une carte porte-circuits.

8. Unité de contrôle de pression de pneumatique selon la revendication 7, **caractérisée en ce que** l'accumulateur solide (6) est soudé au moyen d'un brasage tendre, qui a une température de fusion de 183 °C ou moins.
